# FASCICULE DE BREVET EUROPEEN

(11) **EP 1 600 245 B1**
(45) Date de publication et mention de la délivrance du brevet: **06.08.2008**
(21) Numéro de dépôt: 05300382.8
(22) Date de dépôt: 17.05.2005
(51) Int. Cl.: B23K 26/14

(54) **Procédé de soudage laser ou hybride laser-arc avec formation d'un plasma côté envers**
Vefahren zum Laserschweissen oder Hybriden Laser-Lichtbogenschweissen mit entstehenden rückseitigen Plasma
Laser or hybrid arc-laser welding with formation of a plasma on the back side.

(30) Priorité: 26.05.2004 FR 0451042
(43) Date de publication de la demande: 30.11.2005
(73) Titulaire: L'AIR LIQUIDE, Société Anonyme pour l'Etude et l'Exploitation des Procédés Georges Claude, 75007 Paris (FR)
(72) Inventeur: Briand, Francis, 75009 Paris (FR); Lefebvre, Philippe, 78250 Meulan (FR); Dubet, Olivier, 95130 Franconville (FR)
(74) Mandataire: Pittis, Olivier

(56) Documents cités:
- EP-A- 1 193 023
- US-A- 4 689 467
- PATENT ABSTRACTS OF JAPAN vol. 018, no. 079 (M-1557), 9 février 1994 (1994-02-09) & JP 05 293683 A (NKK CORP), 9 novembre 1993 (1993-11-09)

## Description

L'invention concerne un procédé de soudage laser ou hybride laser-arc d'une ou plusieurs pièces métalliques, en particulier des panneaux plans destinés à une utilisation sur un chantier naval, les bords longitudinaux de tubes ou de pipelines, ou bien la fabrication des tailored-blanks, c'est-à-dire de flancs raboutés utilisables dans le domaine automobile.

Le soudage par faisceau laser est un procédé de soudage très performant qui permet d'obtenir des vitesses de soudage et des profondeurs de pénétration très importantes si on les compare à d'autres procédés plus traditionnels, tel le soudage à l'arc.

Ces performances sont obtenues grâce aux fortes densités de puissances mises en oeuvre lors de la focalisation, par un ou plusieurs miroirs ou lentilles, du faisceau laser sur la ou les pièces à souder.

En effet, ces fortes densités de puissance laser provoquent à la surface de la pièce (ou des pièces) une très forte évaporation laquelle, en se détendant vers l'extérieur, induit un creusement progressif, appelé 'effet fusée', du bain de soudage et conduit à l'apparition, dans l'épaisseur de la tôle, d'un capillaire de vapeur ou « keyhole ». Ce capillaire permet un dépôt direct de l'énergie au coeur de la tôle par opposition avec un procédé plus conventionnel où la fusion est réalisée principalement par propagation thermique.

Typiquement, un capillaire est constitué d'un mélange de vapeurs métalliques et de plasma de vapeurs métalliques dont la particularité est d'absorber le faisceau laser et donc de piéger l'énergie au sein du capillaire même.

Quand le capillaire est débouchant, on dit que la soudure est débouchante, c'est à dire qu'il traverse complètement la tôle à souder. Ce processus est accompagné d'une perte d'énergie côté envers car toute la puissance du faisceau laser n'est pas utilisée pour fondre la tôle. Il y a donc une partie cette puissance laser qui est transmise à travers la tôle, laquelle est d'autant plus importante que la tôle est de faible épaisseur, que la puissance laser est importante et que la vitesse de soudage est faible.

Par ailleurs, le procédé de soudage hybride laser-arc est un procédé de soudage qui combine le soudage à l'arc électrique au soudage laser.

Un tel procédé hybride laser-arc est notamment décrit dans les documents EP-A-800434, EP-A-1273383, EP-A-1199128, EP-A-1212165, EP-A-1337375, WO-A-03/11516, WO-A-03/43776, WO-A-03/82511, EP-A-1160048, EP-A-1160046, EP-A-1160047 et EP-A-1380380.

Le principe de ce procédé est de générer un arc électrique entre une électrode fusible ou non fusible et la ou les pièces à souder, et à focaliser concomitamment un faisceau laser de puissance, de type YAG ou CO₂ par exemple, dans la zone d'arc. Ce procédé, s'il permet également d'obtenir des vitesses de soudage et des profondeurs de pénétration très importantes grâce à l'apparition d'un capillaire de vapeur, permet en outre d'accroître considérablement les tolérances de positionnement des pièces avant soudage par rapport au positionnement très précis indispensable en soudage laser seul du fait de la petite taille du point focal qui est mis en oeuvre dans ce dernier.

Un problème existant en soudage laser et en soudage hybride arc-laser utilisant un générateur laser de type CO₂ est la création d'un plasma de gaz de couverture.

En effet, le plasma de vapeurs métalliques présent dans le capillaire, qui est inhérent au soudage laser seul et qui est renforcé en soudage hybride par la présence d'un arc électrique, en ensemençant en électrons libres le gaz de couverture, peut déclencher l'apparition d'un plasma de gaz de couverture qui est préjudiciable à l'opération de soudage.

Le faisceau laser peut alors être fortement, voire totalement, absorbé et donc conduire à une réduction importante de la profondeur de pénétration, voire à une perte de couplage entre le faisceau et la matière, donc à une interruption momentanée du processus de soudage.

Le seuil d'apparition de ce plasma de gaz de couverture dépend du gaz de couverture utilisé et des paramètres de puissance et de focalisation du faisceau laser.

Pour remédier à ce problème, des mélanges gazeux utilisables en soudage avec laser de type CO₂ ou en soudage hybride ont été proposés par les documents EP-A-1404482, WO-A-03/57398, EP-A-1371444, EP-A-1371445, EP-A-1371446 et EP-A-1375054, lesquels permettent de se prémunir de l'apparition de ce plasma de gaz de couverture du côté endroit.

Par ailleurs, un autre problème en soudage laser ou hybride arc-laser est la forme du cordon de soudure généralement obtenue.

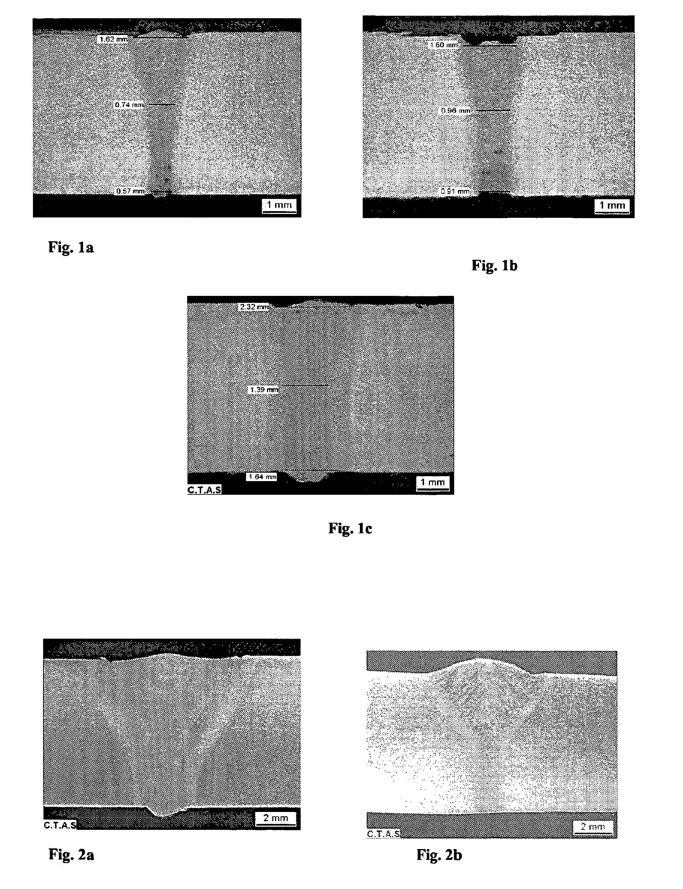

En effet, ces cordons présentent en général des pieds de cordons étroits, ce qui constitue une difficulté importante car il est assez difficile de garantir que le joint sera correctement soudé dans la mesure où la moindre imprécision de positionnement du faisceau laser par rapport au joint va se traduire par un défaut de soudage. Ceci est illustré sur les Figures 1 et 2 ci-annexées.

Il s'ensuit que ce problème de l'étroitesse des pieds de cordons limite donc considérablement l'utilisation du soudage laser ou du soudage hybride dans les procédés de fabrication industriels, en particulier lorsqu'il faut souder des pièces ayant des épaisseurs intermédiaires, c'est-à-dire typiquement d'au moins 1 à 2 mm.

Par ailleurs le document EP-A-1 193 023 décrit l'utilisation conjointe d'une torche laser sur l'endroit et une torche plasma du côté envers des pièces à souder.

La présente invention vise donc à résoudre ce problème en proposant un procédé de soudage laser ou laser-arc hybride permettant d'obtenir des cordons de soudure présentant des pieds de cordons plus larges que les cordons classiques et, si nécessaire, d'introduire dans le cordon de soudure des éléments qui peuvent favoriser la création de microstructures métallurgiques ayant de bonnes propriétés, tels que l'oxygène ou l'azote selon le cas.

La solution de l'invention est alors un procédé de soudage laser de type CO₂ pour assembler par soudage une ou plusieurs pièces métalliques, dans lequel :
(a) on met en oeuvre du côté endroit de la ou des pièces à souder, un premier gaz de protection,
(b) on met en oeuvre du côté envers de la ou des pièces à souder, un second gaz de protection, ledit second gaz de protection étant un gaz de composition différente de celle du premier gaz de protection,
(c) on réalise un joint de soudure à pleine pénétration via un "keyhole" obtenu au moyen d'au moins le faisceau laser délivré du côté endroit de la ou des pièces, et
(d) on crée, durant l'étape c), un plasma du côté envers dans le second gaz de protection en utilisant au moins une partie de la puissance transmise à travers le "keyhole" de l'étape c) pour déclencher l'apparition dudit plasma dans le gaz de protection du côté envers, ledit plasma du côté envers participant à la réalisation dudit joint de soudure.

Selon le cas, le procédé de l'invention peut comprendre l'une ou plusieurs des caractéristiques suivantes :
- les étapes (a) et (b) sont mises en oeuvre simultanément ou concomitamment.
- durant l'étape (c), on crée un "keyhole" du côté endroit de la ou des pièces au moyen du faisceau laser délivré du côté endroit de la ou des pièces.
- le premier gaz de protection est choisi parmi l'hélium, l'argon, les mélanges argon/hélium, hélium/azote, hélium/oxygène, hélium/CO₂, hélium/argon/oxygène, hélium/argon/CO₂, argon/hydrogène ou hélium/hydrogène.
- le second gaz de protection est choisi parmi Ar, Ar/O₂, Ar/CO₂, CO₂, CO₂/N₂, O₂, He/O₂, He/CO₂, Ar/N₂, He/N₂ ou N₂
- à l'étape (c), on met en oeuvre, par ailleurs, un arc électrique et on réalise le joint de soudure entre la ou les pièces à souder au moyen d'au moins l'arc électrique et le faisceau laser délivrés en se combinant l'un à l'autre du côté endroit de la ou des pièces.
- la ou les pièces sont en matériaux métalliques, tels que aciers au carbone, aciers au carbone manganèse, aciers micro-alliés, aciers inoxydables austénitiques, aciers inoxydables ferritiques, aciers inoxydables martensitiques et alliages d'aluminium et/ou la ou les pièces sont des tôles planes ou un tube.
- la ou les pièces à souder ont une épaisseur d'au moins 1 mm, de préférence d'au moins 2 mm.
- il est choisi parmi les procédés hybrides TIG-laser ou MIG-laser.
- le joint de soudure obtenu à l'étape d) a une largeur côté envers d'au moins 2mm.

Dans le cadre de l'invention :
- par " faisceau laser de type CO₂", on entend un faisceau laser généré par un générateur laser de type CO₂
- par "côté endroit", on entend le côté de la ou des pièces à souder situé directement en regard de la tête de soudage laser ou laser hybride, qui reçoit l'impact du faisceau et/ou de l'arc en premier, c'est-à-dire le côté de la surface supérieure de ou des tôles à souder.
- par "côté envers", on entend le côté de la ou des pièces opposé au côté endroit, c'est-à-dire le côté de la surface inférieure de la ou des tôles à souder.
- par "keyhole" : on entend le capillaire formé de vapeurs métalliques et de plasma de vapeurs métalliques, permettant un dépôt direct de l'énergie du faisceau laser au coeur de la tôle à souder qui est crée par la forte densité de puissance du laser.

Autrement dit, selon la présente invention, on utilise judicieusement la puissance transmise (et donc habituellement perdue selon les procédés antérieurs) à travers le "keyhole" pour déclencher l'apparition d'un plasma dans un gaz de protection du côté envers adapté, c'est-à-dire sous les tôles, et différent du gaz de protection du côté endroit, c'est-à-dire au-dessus de la tôle, et de communiquer ainsi au-dessous des pièces à souder un surplus d'énergie permettant d'augmenter la largeur du cordon du côté envers.

L'invention sera mieux comprise au vu des explications suivantes données en références aux Figures annexées parmi lesquelles :
- la Figure 1a représente une macrographie de soudage par faisceau laser de type CO₂ à une puissance de 10.4 kW selon l'art antérieur, de pièces d'acier de 5 mm d'épaisseur, à une vitesse de soudage de 7 m/mn, avec de l'hélium en gaz du côté endroit, et avec focalisation du laser à la surface des pièces à souder.
- la Figure 1b représente une macrographie obtenue dans les mêmes conditions que celles de la Figure 1a mais à une vitesse de soudage de 3.5 m/mn.
- la Figure 1c représente une macrographie obtenue dans les mêmes conditions que celles de la Figure 1a mais à une vitesse de soudage de 2.5 m/mn et focalisation du laser 5 mm au-dessus de la surface des pièces et avec de l'hélium en gaz du côté endroit et aussi du côté envers.
- les Figures 2a et 2b représentent des macrographies de soudage hybride laser-arc avec arc de type MIG et faisceau laser de type CO₂ d'une puissance de 8 kW selon l'art antérieur, de pièces d'acier de 8 mm d'épaisseur, à une vitesse de soudage de 2.1 m/mn (Fig. 2a) et de 3 m/mn (Fig. 2b) et avec un mélange gazeux Ar/He/O₂ (27%/70%/3%) utilisé comme gaz de protection des côtés envers et endroit.

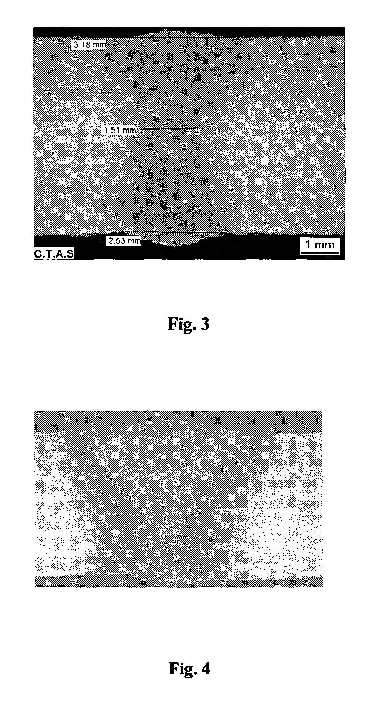

- la Figure 3 représente une macrographie de soudage par faisceau laser de type CO₂ à une puissance de 10.4 kW selon l'invention, de pièces d'acier de 5 mm d'épaisseur, à une vitesse de soudage de 2.5 m/mn, et avec focalisation du laser à 5 mm au-dessus de la surface des pièces à souder, et avec de l'hélium du côté endroit et de l'argon du côté envers.
- la Figure 4 représente une macrographie de soudage hybride laser-arc avec arc de type MIG et faisceau laser de type CO₂ à une puissance de 8 kW selon l'invention, de pièces d'acier de 8 mm d'épaisseur, à une vitesse de soudage de 2.1 m/min, et avec un mélange He/Ar/O2 du côté endroit et de l'argon du côté envers.

Les macrographies de soudage laser des figures 1a à 1c selon l'art antérieur montrent que la largeur du côté envers du cordon de soudure est relativement étroite, c'est-à-dire inférieure à 1 mm, et qu'elle est relativement peu influencée par la vitesse de soudage.

Ainsi, en réduisant la vitesse de soudage de 7 m/mn (Fig. 1a) à 3,5 m/mn (Fig. 1b), on observe que la largeur du côté envers du cordon passe de 0,6 mm à 0,9 mm, mais elle reste cependant faible.

En défocalisant le faisceau laser par rapport à la surface et en réduisant encore la vitesse, on peut augmenter un peu la largeur du côté envers qui passe ainsi à 1,6 mm (Fig. 1c), tout en augmentant aussi un peu la largeur du côté endroit du cordon obtenu.

Cette diminution de vitesse se traduit également par une augmentation de la puissance laser perdue du coté envers de la tôle. En effet, la puissance non utilisée pour fondre la tôle est transmise à travers le "keyhole" et débouche de l'autre coté où elle perdue dans les outillages de fixation ou de support des tôles à assembler. Ainsi, de façon générale, plus la vitesse de soudage est réduite plus la puissance transmise est importante.

Les figures 2a et 2b montrent des macrographies de soudage hybride MIG-laser selon l'art antérieur. Plus précisément, la figure 2a est un exemple de soudage hybride de pièces mises bout à bout avec un espacement de 0,6 mm entre elles, alors que la figure 2b est un exemple de soudage hybride de pièces avec un chanfrein qui présente un talon de 3 mm et une ouverture d'angle de 12°. Dans les 2 cas, un fil plein de type 70S est utilisé à une vitesse de fil de 15m/min et le mélange gazeux du côté endroit est un mélange formé de 70% en volume de He, de 27% de Ar et d'oxygène pour le reste (i.e. 3%).

Ces deux macrographies montrent un des intérêts du soudage hybride, lequel permet d'obtenir un élargissement du cordon côté endroit grâce à la présence d'un arc électrique, autorisant ainsi des tolérances d'accostage ou de positionnement plus importantes.

Malheureusement, là aussi, les pieds de cordon sont relativement étroits et ne présentent pas d'améliorations significatives par rapport au soudage laser puisque les macrographies des Figures 2a et 2b présentent une largeur de cordon du côté envers de seulement 1,6 mm et 0.8 mm, respectivement.

Pour obtenir une augmentation importante de cette largeur de cordon du côté envers, il faudrait baisser de manière drastique la vitesse de soudage, provoquant ainsi une perte de productivité. De même que pour le soudage laser, la diminution de vitesse en soudage hybride se traduit par une augmentation de la puissance laser transmise à travers le "keyhole".

En se basant sur ces observations, les auteurs de la présente invention ont eu l'idée d'utiliser la puissance transmise (et donc habituellement perdue) à travers le "keyhole" pour déclencher l'apparition d'un plasma dans un gaz de protection adapté distribué du côté envers et différent du gaz de protection utilisé du côté endroit, et de communiquer ainsi au dessous de la tôle à souder un surplus d'énergie qui permet d'augmenter la largeur envers du cordon.

Ainsi, la Figure 3 montre une macrographie de cordon de soudage laser pour lequel on est venu créer, selon l'invention, un plasma du côté envers dans de l'argon utilisé en tant que gaz de protection envers, alors que de l'hélium est utilisé comme gaz du côté endroit.

Comme on peut le voir, la largeur envers du cordon obtenu est alors de 2,5 mm et est à comparer à celle de la Figure 1c qui était de seulement 1,6 mm.

Par ailleurs, sur la figure 4, est représentée une macrographie de cordon de soudage hybride MIG-laser selon l'invention, pour lequel on est venu créer un plasma envers dans de l'argon.

Comme on peut le voir, la largeur envers du cordon sur la Figure 4 est de 2,6 mm et elle est à comparer à celle de la Figure 2a qui n'était que de 1,6 mm.

De manière générale, l'importance de l'élargissement du pied de cordon dépend bien entendu de l'importance du plasma envers d'argon qui est déclenché et ce, aussi bien en soudage laser qu'en soudage hybride laser-arc.

Un autre avantage du procédé de l'invention est qu'en fonction de la nature du gaz de protection du côté envers choisi, on peut favoriser ou contrôler l'entrée d'éléments dans le cordon de soudure et changer ainsi la microstructure métallurgique du cordon de soudure.

Ainsi, avec un gaz ou mélange gazeux du côté envers tel que Ar/O₂, Ar/CO₂, CO₂, O₂, He/O₂ ou He/CO₂, quand le plasma de protection du côté envers est créé, on vient dissocier l'oxygène ou le CO₂ et on permet ainsi l'introduction de molécules deO₂ dans le métal fondu.

Par ailleurs, avec un gaz ou un mélange gazeux du côté envers, tel que Ar/N₂, He/N₂ ou N₂, quand le plasma de protection du côté envers est créé, on vient dissocier l'azote et on permet ainsi l'introduction d'azote dans le métal fondu, ce qui peut être utile au soudage d'aciers de types duplex et super duplex par exemple.

## Revendications

1. Procédé de soudage laser de type CO₂ pour assembler par soudage une ou plusieurs pièces métalliques, dans lequel :
(a) on met en oeuvre du côté endroit de la ou des pièces à souder, un premier gaz de protection,
(b) on met en oeuvre du côté envers de la ou des pièces à souder, un second gaz de protection, ledit second gaz de protection étant un gaz de composition différente de celle du premier gaz de protection,
(c) on réalise un joint de soudure à pleine pénétration via un "keyhole" obtenu au moyen d'au moins le faisceau laser délivré du côté endroit de la ou des pièces, et
(d) on crée, durant l'étape c), un plasma du côté envers dans le second gaz de protection en utilisant au moins une partie de la puissance transmise à travers le "keyhole" de l'étape c) pour déclencher l'apparition dudit plasma dans le gaz de protection du côté envers, ledit plasma du côté envers participant à la réalisation dudit joint de soudure.

2. Procédé selon la revendication 1, **caractérisé en ce que** les étapes (a) et (b) sont mises en oeuvre simultanément ou concomitamment.

3. Procédé selon l'une des revendications 1 ou 2, **caractérisé en ce que** la ou les pièces sont en acier au carbone, acier au carbone-manganèse, acier micro-allié, acier inoxydable austénitique, ferritique ou martensitique, et en alliage d'aluminium.

4. Procédé selon l'une des revendications 1 à 3, **caractérisé en ce que** le premier gaz de protection est choisi parmi l'hélium, l'argon, les mélanges argon/hélium, hélium/azote, hélium/oxygène, hélium/CO₂, hélium/argon/oxygène, hélium/argon/CO₂, argon/hydrogène ou hélium/hydrogène.

5. Procédé selon l'une des revendications 1 à 3, **caractérisé en ce que** le second gaz de protection est choisi parmi Ar, Ar/O₂, Ar/CO₂, CO₂, CO₂/N₂, O₂, He/O₂, He/CO₂, Ar/N₂, He/N₂ ou N₂

6. Procédé selon l'une des revendications 1 à 5, **caractérisé en ce qu'**à l'étape (c), on met en oeuvre, par ailleurs, un arc électrique et on réalise le joint de soudure entre la ou les pièces à souder au moyen d'au moins l'arc électrique et le faisceau laser délivrés en se combinant l'un à l'autre du côté endroit de la ou des pièces.

7. Procédé selon l'une des revendications 1 à 6, **caractérisé en ce que** la ou les pièces sont en matériaux métalliques et/ou la ou les pièces sont des tôles planes ou un tube.

8. Procédé selon l'une des revendications 1 à 7, **caractérisé en ce que** la ou les pièces à souder ont une épaisseur d'au moins 1 mm, de préférence d'au moins 2 mm.

9. Procédé selon la revendication 6, **caractérisé en ce qu'**il est choisi parmi les procédés hybrides TIG-laser ou MIG-laser.

10. Procédé selon l'une des revendications 1 à 7, **caractérisé en ce que** le joint de soudure obtenu à l'étape d) a une largeur côté envers d'au moins 2 mm.

## Claims

1. CO₂-type laser welding process for joining together one or more metal workpieces by welding, in which:
a) a first shielding gas is used on the topside of the workpiece or workpieces to be welded;
b) a second shielding gas is used on the backside of the workpiece or workpieces to be welded, the said second shielding gas being a gas of different composition from that of the first shielding gas;
c) a full-penetration welded joint is produced via a keyhole obtained by means of a laser beam delivered from the topside of the workpiece or workpieces; and
d) during step c) a plasma is created on the backside in the second shielding gas using at least some of the power transmitted through the keyhole of step c) in order to cause the said plasma to appear in the shielding gas on the backside, the said plasma on the backside contributing to the production of the said welded joint.

2. Process according to Claim 1, **characterized in that** steps a) and b) are carried out simultaneously or concomitantly;

3. Process according to either of Claims 1 or 2, **characterized in that** the workpieces are made of carbon steel, carbon-manganese steel, microalloyed steel, austentic, ferritic or martensitic stainless steel or an aluminium alloy.

4. Process according to one of Claims 1 to 3, **characterized in that** the first shielding gas is chosen from helium, argon and argon/helium, helium/nitrogen, helium/oxygen, helium/CO₂, helium/argon/oxygen, helium/argon/CO₂, argon/hydrogen and helium/hydrogen mixtures.

5. Process according to one of Claims 1 to 3, **characterized in that** the second shielding gas is chosen from Ar, Ar/O₂, Ar/CO₂, CO₂, CO₂/N₂ O₂, He/O₂, He/CO₂, Ar/N₂, He/N₂ and N₂.

6. Process according to one of Claims 1 to 5, **characterized in that** in step (c), an electric arc is also used and the welded joint is produced between the workpiece or workpieces to be welded by means of at least the electric arc and the laser beam that are delivered, by combining one with the other on the topside of the workpiece or workpieces.

7. Process according to one of Claims 1 to 6, **characterized in that** the workpiece or workpieces are made of metallic materials and/or the workpiece or workpieces are flat plates or a tube.

8. Process according to one of Claims 1 to 7, **characterized in that** the workpiece or workpieces to be welded have a thickness of at least 1 mm and preferably at least 2 mm.

9. Process according to Claim 6, **characterized in that** it is chosen from hybrid laser/TIG or laser/MIG processes.

10. Process according to one of Claims 1 to 7, **characterized in that** the welded joint obtained in step d) has a width on the backside of at least 2 mm.

## Patentansprüche

1. Verfahren zum CO₂-Laserschweißen zum Zusammenfügen eines oder mehrerer Metallteile durch Schweißen, in dem:
(a) man ein erstes Schutzgas an der rechten Seite des zu schweißenden Teils oder der zu schweißenden Teile einsetzt,
(b) man ein zweites Schutzgas an der linken Seite des zu schweißenden Teils oder der zu schweißenden Teile einsetzt, wobei das zweite Schutzgas ein Gas mit einer Zusammensetzung ist, die sich von der des ersten Schutzgases unterscheidet,
(c) man eine durchgeschweißte Schweißnaht über ein "Schlüsselloch" herstellt, das mittels mindestens des Laserstrahls, der an der rechten Seite des Teils oder der Teile abgegeben wird, erhalten wird, und
(d) man während des Schritts c), ein Plasma an der linken Seite in dem zweiten Schutzgas erzeugt, indem mindestens ein Teil der Leistung genutzt wird, die im Schritt c) durch das "Schlüsselloch" übertragen wird, um das Auftreten des Plasmas in dem Schutzgas an der linken Seite auszulösen, wobei das Plasma an der linken Seite zur Herstellung der Schweißnaht beiträgt.

2. Verfahren nach Anspruch 1, **dadurch gekennzeichnet, dass** die Schritte (a) und (b) simultan oder gleichzeitig umgesetzt werden.

3. Verfahren nach einem der Ansprüche 1 oder 2, **dadurch gekennzeichnet, dass** das Teil oder die Teile aus Kohlenstoffstahl, Kohlenstoff-Mangan-Stahl, mikrolegiertem Stahl, nicht rostendem Austenit-, Ferrit- oder Martensitstahl und aus Aluminiumlegierung ist bzw. sind.

4. Verfahren nach einem der Ansprüche 1 bis 3, **dadurch gekennzeichnet, dass** das erste Schutzgas aus Helium, Argon, Argon/Helium-, Helium/Stickstoff-, Helium/Sauerstoff-, Helium/CO₂-, Helium/Argon/Sauerstoff-, Helium/Argon/CO₂-, Argon/Wasserstoff- oder Helium/Wasserstoff-Gemischen ausgewählt ist.

5. Verfahren nach einem der Ansprüche 1 bis 3, **dadurch gekennzeichnet, dass** das zweite Schutzgas aus Ar, Ar/O₂, Ar/CO₂, CO₂, CO₂/N₂, O₂, He/O₂, He/CO₂, Ar/N₂, He/N₂ oder N₂ ausgewählt ist.

6. Verfahren nach einem der Ansprüche 1 bis 5, **dadurch gekennzeichnet, dass** im Schritt c) außerdem ein Lichtbogen eingesetzt wird und die Schweißnaht zwischen dem zu schweißenden Teil oder den zu schweißenden Teilen mittels mindestens des Lichtbogens und des Laserstrahls, die abgegeben werden, hergestellt wird, indem sie an der rechten Seite des Teils oder der Teile kombiniert werden.

7. Verfahren nach einem der Ansprüche 1 bis 6, **dadurch gekennzeichnet, dass** das Teil oder die Teile aus metallischen Materialien sind und/oder das Teil oder die Teile aus ebenen Blechen oder einem Rohr bestehen.

8. Verfahren nach einem der Ansprüche 1 bis 7, **dadurch gekennzeichnet, dass** das zu schweißende Teil oder die zu schweißenden Teile eine Dicke von mindestens 1 mm, vorzugsweise mindestens 2 mm aufweist bzw. aufweisen.

9. Verfahren nach Anspruch 6, **dadurch gekennzeichnet, dass** es aus WIG-Laser- oder MIG-Laser-Hybridverfahren ausgewählt ist.

10. Verfahren nach einem der Ansprüche 1 bis 7, **dadurch gekennzeichnet, dass** die Schweißnaht, die im Schritt d) erhalten wird, eine Breite an der linken Seite von mindestens 2 mm aufweist.
